# FASCICULE DE BREVET EUROPEEN

(11) **EP 2 394 785 B1**
(45) Date de publication et mention de la délivrance du brevet: **06.08.2014**
(21) Numéro de dépôt: 11169177.0
(22) Date de dépôt: 08.06.2011
(51) Int. Cl.: B25J 9/10, B25J 18/02, B25J 5/00, B24B 41/00, B25H 1/00, B24B 41/02, B24B 7/18

(54) **Dispositif d'assistance au portage d'au moins un outil de ponçage et/ou de lustrage**
Hilfsvorrichtung zum Tragen von mindestens einem Schleif- und/oder Polierwerkzeug
Device for assisting the support of at least one sanding and/or polishing tool

(30) Priorité: 11.06.2010 FR 1002473
(43) Date de publication de la demande: 14.12.2011
(73) Titulaire: Tournemer, 44000 Nantes (FR)
(72) Inventeur: Breteche, Gilles, 44000 NANTES (FR)
(74) Mandataire: Saint-Marc-Etienne, Christophe Andréas

(56) Documents cités:
- WO-A1-2007/141320
- DE-A1- 19 604 123
- GB-A- 1 098 515

## Description

Le domaine de l'invention est celui de la conception et de la fabrication de l'outillage industriel. Plus précisément, l'invention concerne les techniques de ponçage et/ou de lustrage. Un dispositif selon le préambule de la revendication 1 est connu du document WO-A-2007/141320, par exemple.

Dans le domaine de l'invention, les domaines d'activité concernés par les techniques de ponçage ou de lustrage sont nombreux. A titre d'exemple, on peut citer notamment :
- les entreprises de restauration de bateaux ;
- les entreprises de modelage de préforme et de forme de moules;
- les entreprises de réalisation de prototypes divers à surface complexe;
- les entreprises du bâtiment, en particulier celles pratiquant la restauration de locaux et/ou la finition de plafond ou de mur après sablage;
- ...

Les outils de ponçage ou de lustrage sont des outils relativement lourds d'une part et, d'autre part, sont des outils tournants et agissant par frottement (transmettant donc des vibrations à l'utilisateur). L'utilisation de ces outils implique par conséquent un engagement physique important de la part des opérateurs, en particulier lorsqu'ils doivent travailler sur des surfaces nécessitant de supporter en tout ou partie le poids de l'outil (contrairement au travail sur une surface sur laquelle on peut faire reposer l'outil).

Dans la pratique, on constate que l'usage intensif et répété des outils de ponçage ou de lustrage engendre une fatigue importante des opérateurs, nécessitant l'aménagement de périodes de récupération longues pendant la période des travaux (pouvant aller de 25 à 45 % du temps passé). Dans certains cas, l'effort fourni se traduit au-delà de la fatigue, et peut conduire à des troubles musculo-squelettiques, et donc à des souffrances qui peuvent imposer des arrêts de travail prolongés.

Il existe donc un besoin pour remédier à cette situation de fait.

Un objectif de l'invention est donc de proposer une technique de ponçage et/ou de lustrage qui évite, ou à tout le moins limite, la fatigue et les risques de troubles musculo-squelettiques dus à un usage intensif d'un outil de ponçage ou de lustrage.

L'invention a également pour objectif de fournir une telle technique qui soit apte à répondre à différentes configurations de travail classiquement rencontrées en ponçage ou en lustrage.

L'invention a aussi pour objectif de fournir une telle technique qui permet d'exercer de façon intensive des opérations de ponçage et/ou de lustrage par des personnes physiquement peu puissantes et/ou peu résistantes.

Ces objectifs, ainsi que d'autres qui apparaîtront par la suite, sont atteints grâce à l'invention qui est définie dans la revendication 1.

Ainsi, grâce à l'invention, il est possible d'effectuer des tâches intensives et/ou répétées de ponçage ou de lustrage, sans que cela conduise à une fatigue, ou a fortiori, sans occasionner de troubles musculo-squelettiques.

En effet, grâce à un dispositif selon l'invention, le poids de l'outil est supporté par le dispositif lui-même, et non par l'opérateur.

En outre, les vibrations occasionnées par le travail de l'outil sur la surface à poncer ou à lustrer tendent à se dissiper dans le dispositif.

Comme cela va apparaître plus clairement par la suite, avec un dispositif selon l'invention, l'opérateur n'a plus qu'une tâche à effectuer : celle de piloter les déplacements de l'outil en vue de guider celui-ci sur la surface à poncer ou à lustrer.

On comprend donc que toute personne peut réaliser des tâches de ponçage ou de lustrage de façon intensive et/ou répétée sans qu'il soit nécessaire d'être physiquement très puissant ou très endurant.

Par ailleurs, les moyens de contrôle permettent de bien appliquer l'outil sur la surface (l'outil « suit » la surface), ceci en appliquant l'outil avec une pression constante sur la surface quelle que soit la forme de celle-ci (reconnaissance de la surface en temps réel, par opposition à une machine à commande numérique avec laquelle il faut définir préalablement la forme d'une pièce ou, en l'occurrence, d'une surface à usiner).

Selon l'invention, le dispositif comprend des moyens de pilotage desdits moyens d'entraînement, ces moyens de pilotage comprenant au moins une poignée actionnable manuellement.

On note qu'il est toutefois envisageable, selon un autre mode de réalisation, de piloter les moyens d'entraînement à l'aide d'un automate programmable, paramétré de façon à piloter l'outil selon les cycles de déplacement prédéterminés.

Selon une solution avantageuse, le dispositif comprend l'une des caractéristiques suivantes, considérée seule ou en combinaison :
- ledit sous-ensemble est monté pivotant sur le bâti autour d'un axe horizontal ;
- ledit sous-ensemble est monté pivotant sur ledit bâti autour d'un axe vertical ;

Avantageusement, ledit bâti comprend une plateforme dotée de moyens de roulement au sol.

Dans ce cas, ledit sous-ensemble est monté mobile sur une structure préférentiellement montée articulée sur ladite plateforme entre une position verticale et une position horizontale ou rabattue vers l'horizontal.

Ainsi, l'inclinaison de la structure peut être adaptée à l'orientation de la surface à travailler.

Par ailleurs, de cette façon, on obtient un dispositif qui peut être déplacé aisément d'un point à un autre et, si besoin, être amené dans une configuration de transport (ou de stockage, ou de rangement) dans laquelle le dispositif occupe un encombrement réduit.

Selon une autre caractéristique avantageuse, ladite plateforme est pourvue de moyens de lestage comprenant préférentiellement des ballasts susceptibles d'être remplis d'eau.

Selon un mode de réalisation préférentiel, ledit sous-ensemble est démontable dudit bâti, le dispositif comprenant un chariot présentant un plateau réglable en hauteur sur lequel ledit sous-ensemble est susceptible d'être monté dans une configuration selon laquelle l'outil présente une surface de ponçage orientée vers le haut.

De cette façon, le dispositif peut être adapté pour occuper une configuration classique de ponçage, dans laquelle il est nécessaire de passer l'outil sous la surface à poncer. C'est le cas par exemple sur un chantier de ponçage de coques de bateaux : l'opérateur peut alors placer l'outil en dirigeant la surface de ponçage de l'outil vers le haut au moment de poncer les parties les plus basses de la coque du bateau.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 illustrent schématiquement un dispositif selon l'invention, respectivement selon des vues de côté et de dessus;
- les figures 3 et 4 illustrent de façon schématique des plages de déplacement angulaires d'un outil porté par un dispositif selon l'invention ;
- la figure 5 illustre une configuration particulière d'un dispositif selon l'invention.

Tel que décrit précédemment, le principe de l'invention réside dans le fait de proposer un dispositif d'assistance au portage d'un outil de ponçage ou de lustrage, sous la forme préférée d'une machine ambulatoire comprenant un sous-ensemble portant l'outil destiné à être déplacé par des moyens d'entraînement tandis que des moyens de contrôle de la pression assurent une pression prédéterminée de l'outil sur une surface à poncer ou à lustrer.

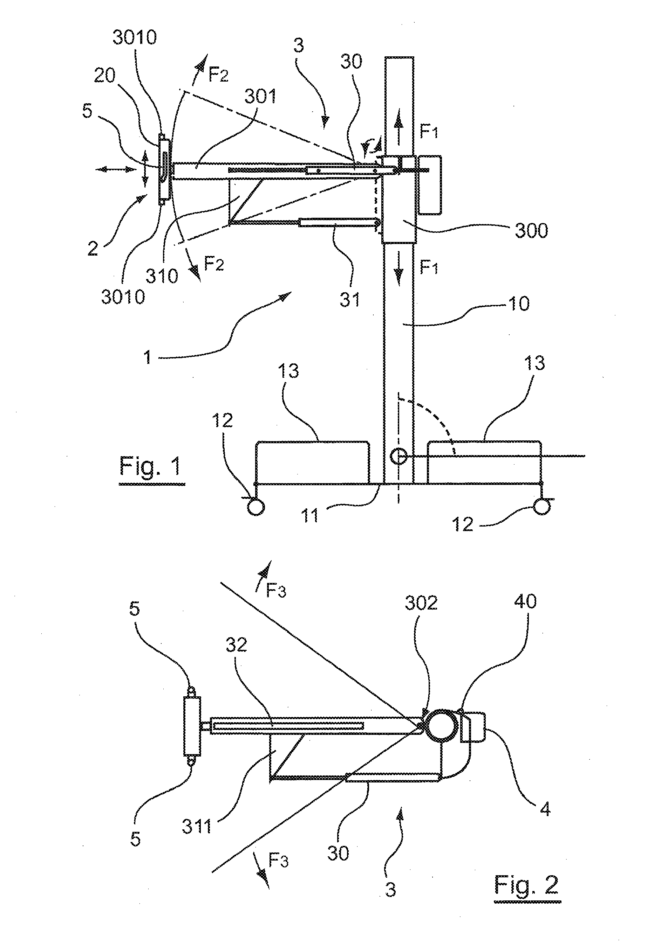

En référence aux figures 1 et 2, un dispositif d'assistance au portage d'un outil de ponçage (ou de lustrage) selon l'invention comprend :
- un bâti de base 1, comprenant un sous-ensemble support 3, monté de façon à être mobile dans trois directions orthogonales entre elles, un outil de ponçage (ou de lustrage) 2 étant destiné à être porté par le sous-ensemble support 3 ;
- des moyens d'entraînement 30, 31, 32, destinés à déplacer le sous-ensemble support 3 sur le bâti dans les trois directions;
- des moyens de contrôle de la pression appliqués par l'outil 2 sur une surface à poncer ou à lustrer.

Selon le présent mode de réalisation, le bâti 1 comprend un mât 10 et le sous-ensemble support 3 comprend une partie formant fourreau 300 monté mobile en translation le long du mât 10 (tel qu'illustré par les flèches F1). Le déplacement du fourreau sur le mât est obtenu par un système à crémaillère actionné par une manivelle pour travailler sur différentes plages successives en hauteur.

En outre, le sous-ensemble support comprend un bras 301 couplé par une liaison rotule 302 au fourreau 300 de telle sorte que :
- le bras est monté pivotant autour d'un axe horizontal ;
- le bras est monté pivotant autour d'un axe vertical.

De plus, le bras 301 est un bras télescopique, susceptible de se déployer ou se rétracter sous l'effet d'un vérin 32 de type double effet.

Ainsi, l'outil 2 porté par le bras porteur peut être déplacé en trois directions orthogonales entre elles ou, bien entendu, dans une combinaison de ces directions.

A l'extrémité du bras, l'outil 2 est porté par l'intermédiaire d'un système de griffes circulaires, montées sur rotule.

Le bras 301 porte également un palpeur 3010 (en l'occurrence deux palpeurs diamétralement opposés par rapport à l'outil de ponçage) permettant de contrôler la pression exercée par l'outil sur la surface à poncer ou à lustrer, tel que cela va être décrit plus en détails par la suite. Un tel palpeur peut être de type mécanique ou électronique.

Outre le vérin 32 destiné à entraîner le déploiement/reploiement du vérin du bras 301 télescopique, les moyens d'entraînement du sous-ensemble support comprennent:
- un vérin 31 (figure 1) relié par l'une de ses extrémités au fourreau 300 du sous-ensemble support et par l'autre de ses extrémités à une platine 310 s'étendant verticalement, vers le bas, à partir du bras porteur 301, ce vérin 31 étant destiné à entraîner un pivotement dans un plan vertical du bras porteur 301 tel qu'indiqué par les flèches F2 ;
- un vérin 30 couplé par l'une de ses extrémités au fourreau 300 du sous-ensemble support et par l'autre de ses extrémités à une platine 311 s'étendant horizontalement en côté et à partir du bras 301, ce vérin 30 étant destiné à entraîner un pivotement du bras 301 dans un plan horizontal tel qu'illustré par les flèches F3 sur la figure 2.

Les moyens d'entraînement constitués par le vérin 31 sont pilotés par une ou plusieurs poignées 5 actionnables manuellement, ou par joystick.

Selon le présent mode de réalisation, l'opérateur dispose de deux poignées 5 au voisinage de l'outil 2 et de part et d'autre de celui-ci.

Les vérins sont pilotés par un logiciel à fonction multiple recevant des informations représentatives des impulsions transmises par les mains de l'opérateur sur le joystick, ou par des capteurs de pression à potentiomètre. Le logiciel est exécuté par une unité 4 montée sur le bâti (et pouvant être pivotés autour d'un axe 40)

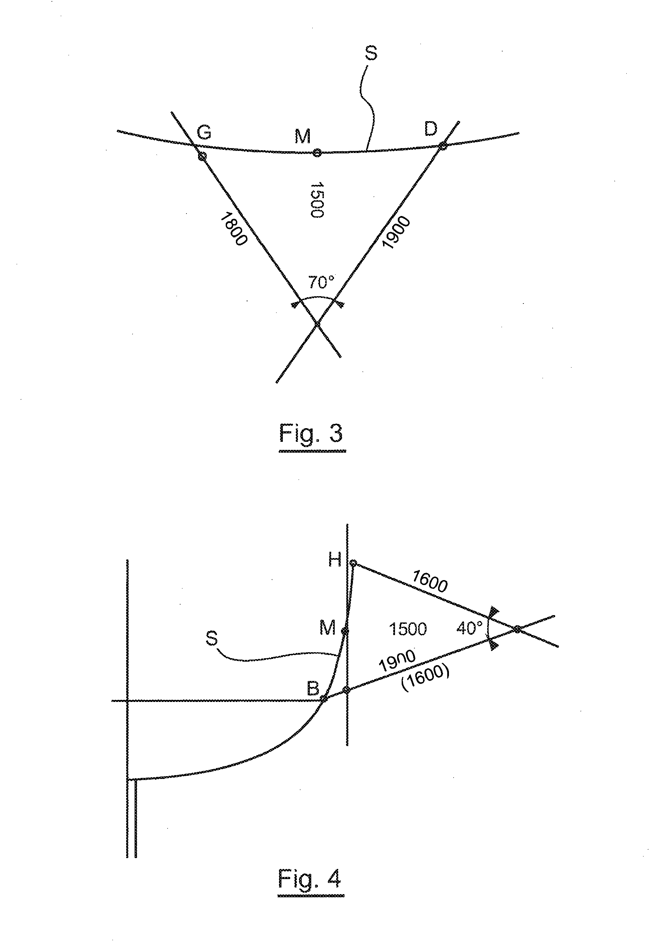

La figure 3 illustre schématiquement les déplacements latéraux d'un outil porté par un dispositif selon l'invention, par rapport à une surface à poncer S. Tel que cela apparaît, l'outil est mobile à partir d'un point M, au niveau duquel le bras est orienté orthogonalement à la surface S, vers un point latéral droite D ou un point latéral gauche G impliquant le déploiement du bras télescopique 301. A titre indicatif, le débattement angulaire du bras porteur dans le plan horizontal est de 70°.

La figure 4 illustre schématiquement les déplacements de l'outil 2 porté par un dispositif selon l'invention, dans un plan vertical. Tel que cela apparaît, l'outil est mobile à partir d'un point M, au niveau duquel le bras est orienté horizontalement, vers un point haut H ou vers un point bas B, impliquant le déploiement du bras porteur par rapport à la longueur qu'il présente au niveau du point M. A titre indicatif, le débattement angulaire du bras dans le plan vertical est de 40°.

En référence à la figure 1, un dispositif selon l'invention comprend une plateforme 11 dotée de moyens de roulement au sol, constituée en l'occurrence par des roulettes rétractables. Le mât 10 est monté sur la plateforme 12 de façon articulée entre une position verticale et une position horizontale, ou rabattue vers l'horizontal de façon à occuper une position d'inclinaison sélectionnée en fonction de la surface à poncer ou à lustrer (ou pour occuper une position de transport dans laquelle le mât est placé horizontalement).

On note que la hauteur du mât peut être ajustée selon une variante envisageable.

Par ailleurs, selon un autre mode de réalisation envisageable, le mât peut être utilisé sans être monté sur la plateforme 12, par sa mise en tension entre deux points fixes, par vis ou vérin. La partie supérieure du mât peut alternativement recevoir deux barres d'étayage qui peuvent se fixer à la surface à poncer ou à lustrer, soit former une liaison au sol à la façon de béquilles pour assurer la stabilité du dispositif selon un trépied, ceci par le réglage en longueur des barres d'étayage.

De plus, tel qu'illustré par la figure 1, la plateforme 12 est pourvue de moyens de lestage 13, constitués selon le présent mode de réalisation par des ballasts susceptibles d'être remplis d'eau, à l'aide d'une pompe électrique double effet.

Selon un mode d'utilisation possible, le sous-ensemble porteur 3 peut être démonté du bâti, en étant séparé du mât 10. Le dispositif comprend un accessoire sous forme d'un chariot présentant un plateau réglable en hauteur sur lequel le sous-ensemble est susceptible d'être monté dans une configuration selon laquelle l'outil présente une surface de ponçage 20 orientée vers le haut.

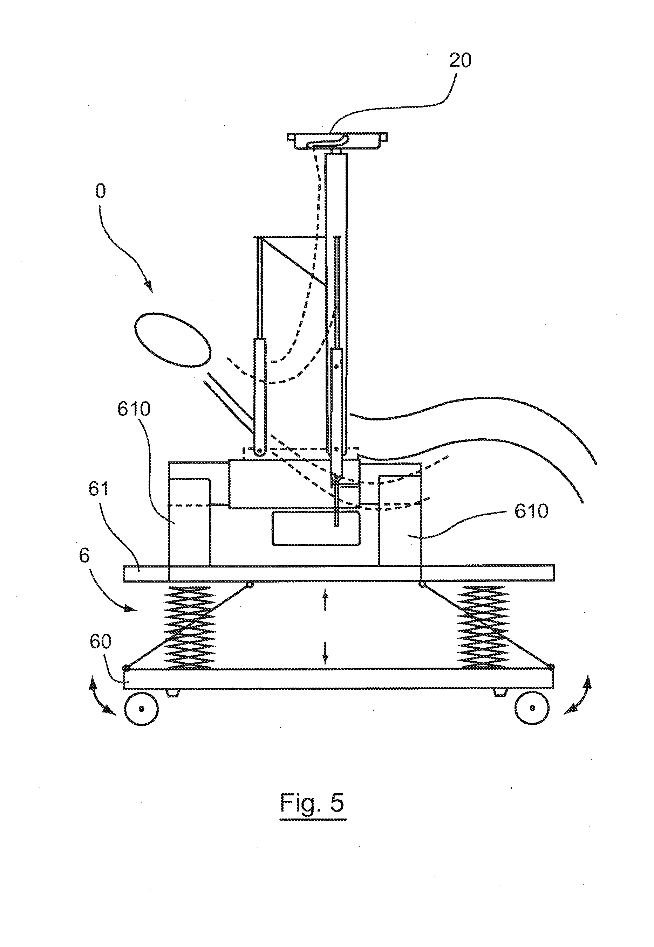

Ceci est illustré par la figure 5 qui montre un chariot 6 comprenant deux plateaux:
- un plateau inférieur 60 en appui sur le sol et présentant des roues escamotables 600 ;
- un plateau supérieur 61 mobile en hauteur par rapport au plateau inférieur 60, ceci à l'aide d'un système à pantographe ou autre.

Le plateau supérieur présente deux arceaux 610 servant à accueillir le mât 10 ou seulement un tronçon séparable de celui-ci, y inclus le sous-ensemble 3 décrit précédemment, ceci dans une position selon laquelle l'outil présente sa surface de ponçage orientée vers le haut.

On note que le chariot peut également porter un siège permettant à un opérateur 0 de s'installer tel qu'illustré sur la figure 5.

Le fonctionnement de la machine est décrit ci-après selon deux modes d'utilisation envisageables.

### L'utilisation en portage simple (simulation d'opération sur une surface à poncer ou à lustrer verticale).

Selon ce mode d'utilisation, les étapes de mise en oeuvre d'un dispositif selon l'invention tel que décrit précédemment sont les suivantes :
- positionner le dispositif de telle sorte que l'outil porté par le bras soit sensiblement au centre de la surface à travailler (le dispositif étant dimensionné préférentiellement pour couvrir une surface, selon la forme, de 2,5 m par 1,5 m) ;
- ajuster l'inclinaison du mât du bâti, de façon à amener celui-ci sensiblement parallèlement à la surface;
- régler, si possible, l'orientation du bras de telle sorte que celui-ci s'étende orthogonalement à la surface à opérer en son centre;
- paramétrer le logiciel de l'unité de calcul, notamment avec le poids de l'outil ;
- fixer l'outil sur le bras porteur, à l'extrémité de celui-ci.

Dans son mode d'utilisation, l'opérateur déplace l'outil à poncer dans toutes les directions, ceci sans avoir à porter l'outil. La pression à appliquer par l'outil sur la surface à travailler peut également être saisie de façon à être enregistrée par le logiciel.

Le logiciel de l'unité travaille ensuite en temps réel de façon à reconnaître à tout instant les variations de longueur du bras dues à ses déplacements latéralement et en hauteur (comme illustré par les figures 3 et 4), et ajuste en permanence la longueur du bras 301 par l'intermédiaire du vérin 32, en fonction du pilotage de l'opérateur et des informations fournies par le palpeur.

### L'utilisation en portage est mise en pression (simulation d'opération sur une surface verticale).

Selon ce mode d'utilisation, les étapes de mise en oeuvre d'un dispositif selon l'invention telle que décrit précédemment sont les suivantes :
- positionner le dispositif de telle sorte que l'outil porté par le bras soit sensiblement au centre de la surface à travailler (le dispositif étant dimensionné préférentiellement pour couvrir une surface, selon la forme, de 2,5 m par 1,5 m) ;
- ajuster l'inclinaison du mât du bâti, de façon à amener celui-ci sensiblement parallèlement à la surface;
- régler, si possible, l'orientation du bras de telle sorte que celui-ci s'étende orthogonalement à la surface à opérer en son centre;
- paramétrer le logiciel de l'unité de calcul, notamment avec le poids de l'outil ;
- fixer l'outil sur le bras porteur, à l'extrémité de celui-ci ;
- étayer, si nécessaire, le dispositif à l'aide de deux barres d'étayage.

Selon ce mode d'utilisation, l'opérateur amène l'outil au contact de la surface à travailler. L'opérateur déplace ensuite l'outil dans toutes les positions, sans le porter, ni l'appuyer. Le logiciel reconnaît en temps réel le porte-à-faux du bras et ajuste en permanence les longueurs des vérins 30, 31 et 32.

En parallèle, le palpeur fournit en temps réel des informations relatives au déplacement de la ponceuse sur la pièce, et fournit au logiciel une information permettant de piloter une pression progressive après détection de la mise en mouvement de l'outil. Le logiciel ajuste en permanence la longueur des vérins 30, 31 et 32.

L'opérateur pilote la trajectoire de l'outil sans exercer de pression autre que celle nécessaire au maniement du joystick.

Le logiciel est paramétré de façon à procéder automatiquement à un arrêt de la mise en pression de l'outil sur la surface à travailler lorsque l'outil n'est plus déplacé.

L'opérateur peut ajuster la pression manuellement pendant l'opération, voire forcer le ponçage tandis que l'outil est immobilisé, ceci à l'aide d'un clavier de commande à proximité immédiate du joystick sur le bâti.

## Revendications

1. Dispositif d'assistance au pilotage d'au moins un outil de ponçage et/ou de lustrage comprenant :
- un bâti de base (1) ,
- au moins un sous-ensemble support (3) monté sur ledit bâti de façon à être mobile en trois directions orthogonales entre elles, ledit sous-ensemble support (3) étant destiné à porter un outil de ponçage (2), ledit sous-ensemble support comprenant:
- un bras (301) destiné à porter ledit outil
- des moyens d'entraînement (30, 31, 32) destinés à déplacer le bras (301) sur ledit bâti dans les trois directions ;
- des moyens de contrôle de la pression appliquée par ledit outil de ponçage (2) sur une surface de ponçage, lesdits moyens de contrôle commandant les moyens d'entraînement de façon que l'outil exerce une pression prédéterminée sur ladite surface de ponçage;
characterisé en ce que le sous-ensemble support comprend une poignée (5) disposée au voisinage de l'outil (2) pour son déplacement manuel.

2. Dispositif selon la revendication 1, **caractérisé en ce que** ledit sous-ensemble (3) est monté pivotant sur ledit bâti (1) autour d'un axe horizontal.

3. Dispositif selon la revendication 1, **caractérisé en ce que** ledit sous-ensemble (3) est monté pivotant sur ledit bâti (1) autour d'un axe vertical.

4. Dispositif selon l'une quelconque des revendications 1 à 3, **caractérisé en ce que** ledit bâti comprend une plate-forme (11) dotée de moyens de roulement au sol.

5. Dispositif selon la revendication 4, **caractérisé en ce que** ledit sous-ensemble est monté mobile sur une structure montée articulée sur une assise entre une position verticale et une position rabattue vers l'horizontal ou horizontale.

6. Dispositif selon la revendication 5, **caractérisé en ce que** ladite assise est pourvue de moyens de lestage (13).

7. Dispositif selon la revendication 6, **caractérisé en ce que** lesdits moyens de lestage comprennent des ballasts susceptibles d'être remplis d'eau.

8. Dispositif selon l'une quelconque des revendications 1 à 7, **caractérisé en ce que** ledit sous-ensemble est démontable dudit bâti (1) et **en ce qu'**il comprend un chariot présentant un plateau réglable en hauteur sur lequel ledit sous-ensemble est susceptible d'être monté dans une configuration selon laquelle l'outil de ponçage (2) présente une surface de ponçage orientée vers le haut.

## Patentansprüche

1. Vorrichtung zur Unterstützung der Steuerung mindestens eines Schleif- und/oder Polierwerkzeugs, umfassend:
- ein Basisgehäuse (1),
- mindestens eine Trag-Untereinheit (3), die auf dem Gehäuse derart montiert ist, dass sie in drei zueinander orthogonale Richtungen beweglich ist, wobei die Traguntereinheit (3) dazu bestimmt ist, ein Schleifwerkzeug (2) zu tragen, wobei die Traguntereinheit umfasst:
- einen Arm (301), der dazu bestimmt ist, das Werkzeug zu tragen,
- Antriebsmittel (30, 31, 32), die dazu bestimmt sind, den Arm (301) auf dem Gehäuse in drei Richtungen zu verschieben;
- Mittel zur Kontrolle des Drucks, der durch das Schleifwerkzeug (2) auf eine Schleiffläche aufgebracht wird, wobei die Kontrollmittel die Antriebsmittel steuern, so dass das Werkzeug einen vorbestimmten Druck auf die Schleiffläche ausübt,
**dadurch gekennzeichnet, dass** die Traguntereinheit einen Griff (5) umfasst, der benachbart zu dem Werkzeug (2) zu dessen manueller Verschiebung angeordnet ist.

2. Vorrichtung nach Anspruch 1, **dadurch gekennzeichnet, dass** die Untereinheit (3) auf dem Gehäuse (1) um eine Horizontalachse schwenkbar montiert ist.

3. Vorrichtung nach Anspruch 1, **dadurch gekennzeichnet, dass** die Untereinheit (3) auf dem Gehäuse (1) um eine Vertikalachse schenkbar montiert ist.

4. Vorrichtung nach einem der Ansprüche 1 bis 3, **dadurch gekennzeichnet, dass** das Gehäuse eine Plattform (11) umfasst, die mit Mitteln zum Fahren auf dem Boden versehen ist.

5. Vorrichtung nach Anspruch 4, **dadurch gekennzeichnet, dass** die Untereinheit beweglich auf einer Struktur montiert ist, die gelenkig auf einem Sitz zwischen einer vertikalen Position und einer zur Horizontalen umgelegten oder horizontalen Position montiert ist.

6. Vorrichtung nach Anspruch 5, **dadurch gekennzeichnet, dass** der Sitz mit Beschwerungsmitteln (13) versehen ist.

7. Vorrichtung nach Anspruch 6, **dadurch gekennzeichnet, dass** die Beschwerungsmittel Ballast umfassen, der mit Wasser gefüllt werden kann.

8. Vorrichtung nach einem der Ansprüche 1 bis 7, **dadurch gekennzeichnet, dass** die Untereinheit von dem Gehäuse (1) demontierbar ist, und dass sie einen Wagen umfasst, der eine in der Höhe verstellbare Platte aufweist, auf der die Untereinheit in einer Konfiguration montiert werden kann, in der das Schleifwerkzeug (2) eine nach oben gerichtete Schleiffläche aufweist.

## Claims

1. Device for assisting with the control of at least one sanding and/or polishing tool comprising:
- a base frame (1),
- at least one support subassembly (3) mounted on said frame so as to be movable in three directions orthogonal to one another, said support subassembly (3) being intended to carry a sanding tool (2), said support subassembly comprising:
- an arm (301) intended to carry said tool
- drive means (30, 31, 32) intended to displace the arm (301) on said frame in the three directions;
- control means for controlling the pressure applied by said sanding tool (2) on a sanding surface, said control means controlling the drive means so that the tool exerts a predetermined pressure on said sanding surface;
**characterised in that** the support subassembly comprises a handle (5) arranged in the vicinity of the tool (2) for its manual displacement.

2. Device according to Claim 1, **characterised in that** said subassembly (3) is mounted pivotably on said frame (1) about a horizontal axis.

3. Device according to Claim 1, **characterised in that** said subassembly (3) is mounted pivotably on said frame (1) about a vertical axis.

4. Device according to any one of Claims 1 to 3, **characterised in that** said frame comprises a platform (11) provided with means for rolling on the ground.

5. Device according to Claim 4, **characterised in that** said subassembly is mounted movably on a structure mounted in a manner articulated on a base plate between a vertical position and a position folded down towards the horizontal or a horizontal position.

6. Device according to Claim 5, **characterised in that** said base plate is provided with ballasting means (13).

7. Device according to Claim 6, **characterised in that** said ballasting means comprise ballast containers capable of being filled with water.

8. Device according to any one of Claims 1 to 7, **characterised in that** said subassembly is demountable from said frame (1) and **in that** it comprises a carriage having a height-adjustable plate on which said subassembly is capable of being mounted in a configuration according to which the sanding tool (2) has a sanding surface oriented upwards.
